# EUROPÄISCHE PATENTSCHRIFT

(11) **EP 0 689 367 B1**
(45) Veröffentlichungstag und Bekanntmachung des Hinweises auf die Patenterteilung: **27.02.2002**
(21) Anmeldenummer: 94108897.3
(22) Anmeldetag: 09.06.1994
(51) Int. Cl.: H04Q 3/64, H04M 3/36, H04Q 3/58

(54) **Verfahren zum Verteilen von Anrufen in einem Kommunikationsnetz**
Method for call distribution in a communication network
Procédé pour la distribution d'appels dans un réseau de communication

(43) Veröffentlichungstag der Anmeldung: 27.12.1995
(73) Patentinhaber: SIEMENS AKTIENGESELLSCHAFT, 80333 München (DE)
(72) Erfinder: Stademann, Rainer, Dr., D-85658 Egmating (DE)

(56) Entgegenhaltungen:
- EP-A- 0 478 206
- EP-A- 0 490 446
- US-A- 4 191 860
- US-A- 4 737 983
- US-A- 4 858 120
- US-A- 4 953 204
- US-A- 5 291 550
- PROCEEDINGS OF THE THIRTEENTH TELETRAFFIC CONGRESS, 19. Juni 1991, COPENHAGEN (DK) Seiten 279 - 284, XP303041 F.K. LIU ET AL 'An ISDN Application - Simulation modeling of NACD'
- IEEE COMMUNICATIONS MAGAZINE, Bd.28, Nr.10, Oktober 1990, NEWYORK (US) Seiten 76 - 81, XP165758 WOLF 'Advanced Techniques For Managing Telecommunications Networks'
- IEEE GLOBAL TELECOMMUNICATIONS CONFERENCE & EXHIBITION, Bd.3, 2. Dezember 1990, SAN DIEGO (US) Seiten 1640 - 1644, XP218850 CHAU ET AL 'Intelligent network routing using CCS7 and ISDN'

## Beschreibung

Die Erfindung betrifft ein Verfahren zum Verteilen von Anrufen in einem Kommunikationsnetz.

In der europäischen Patentanmeldung EP-0 424 015 A2 wird ein Verfahren zur Realisierung von Anruf-Warteschlangen in der Architektur des intelligenten Netzes (IN) beschrieben, bei dem der Service Control Point (SCP) die Kapazitätsreserve eines Servers indirekt zu bestimmen versucht, indem er Zähler über die, über das intelligente Netz vermittelten aktiven Anrufe (IN-Anrufe) zu den Servern führt. Dies führt jedoch zu Problemen, wenn ein Server Anrufe (Calls) erhält oder selbst tätigt, die der Service Control Point nicht mitzählen kann, weil sie nicht über den SCP vermittelt worden sind oder wenn der Service Control Point den aktuellen Zählerstand durch einen Ausfall verliert.

In der US-Patentschrift 4,191,860 wird ein Verfahren zum Verteilen von Anrufen mithilfe der Architektur des intelligenten Netzes (IN) beschrieben, bei dem der Service Control Point (SCP) die Verfügbarkeit eines Servers ebenfalls indirekt zu bestimmen versucht, indem ein SCP einen Zähler über die durch ihn vermittelten Anrufe zu einem Server führt. Dies führt jedoch ebenfalls zu Problemen, wenn der Server Anrufe (Calls) erhält oder selbst tätigt, die der Service Control Point nicht mitzählen kann, weil sie nicht über den SCP vermittelt worden sind oder wenn der Service Control Point den aktuellen Zählerstand durch einen Ausfall verliert.

In der europäischen Patentanmeldung EP-0 478 206 A2 wird vorgeschlagen, einem Server nur noch dann Anrufe zuzustellen, wenn dieser nach dem Anzeigestand eines Zählers mehr als einen Anruf bedienen könnte. Dies läßt dem Server eine "Reserve" für die obengenannten Sonderfälle, verringert jedoch die durchschnittlichhe Serverauslastung erheblich.

Der Erfindung liegt die Aufgabe zugrunde, die genannten Probleme zu lösen.

Durch das erfindungsgemäße Verfahren wird die Qualität eines Dienstes gesteigert, da bei einem Server, der einen von der zentralen Instanz zugeteilten Anruf wegen mangelnder Kapazität abgewiesen bzw. ausgelöst hat, dafür gesorgt wird, daß an denselben Server für einen bestimmten Zeitraum weniger bzw. keine Anrufe mehr zugeteilt werden.

Durch das erfindungsgemäße Verfahren wird des weiteren die dynamische Belastung des Kommunikationsnetzes verringert, da Anrufe nicht mehr so häufig ausgelöst werden müssen und somit weniger häufig ein erneuter Verbindungsaufbau wegen eines erneuten Anrufs eines Teilnehmers stattfinden muß.

Eine Ausführungsform der Erfindung ist durch Anspruch 2 angegeben. Durch diese Ausführungsform wird die Qualität eines Dienstes weiter gesteigert, da ein von einem Server wegen mangelnder Kapazität abgewiesener Anruf gegenüber dem Teilnehmer nicht ausgelöst, sondern an einen anderen Server weiterverteilt wird.

Außerdem wird durch die Weiterverteilung die dynamische Belastung des Kommunikationsnetzes weiter verringert, da Anrufe nicht mehr so häufig ausgelöst werden müssen und somit weniger häufig ein erneuter Verbindungsaufbau wegen eines erneuten Anrufs eines Teilnehmers stattfinden muß.

Eine Ausführungsform der Erfindung ist durch Anspruch 3 angegeben. Bei dieser Ausführungsform wird die Kapazitätsreserve eines Servers indirekt bestimmt. Die Zuteilung eines Anrufs an einen Server ist also nicht dem Zufall überlassen und es besteht somit eine hohe Wahrscheinlichkeit für eine erstmalige erfolgreiche Zuteilung eines Anrufs an einen Server.

Eine weitere Ausführungsform der Erfindung ist durch Anspruch 4 angegeben. Bei dieser Ausführungsform wird die Wahrscheinlichkeit für eine Zuteilung eines Anrufs über einen bestimmten Zeitraum stark verringert. Wenn allerdings gleich nach der erfolglosen Zuteilung und der damit verbundenen Verringerung der Kapazitätsreservenanzeige ein anderer Anruf ordnungsgemäß ausgelöst wird und dadurch der Anzeigewert der Kapazitätsreserve wieder erhöht wird, kann es bereits innerhalb des genannten Zeitraums zu einer erneuten Zuteilung an diesen Server kommen.

Durch diese Ausführungsform ist außerdem gewährleistet, daß sich auch nach einem Ausfall im SCP, der einen Verlust der Anzeigewerte der Kapazitätsreserven zur Folge hat, die neu gebildeten Anzeigewerte schnell wieder an die realen Werte der Kapazitätsreserven anpassen.

Eine weitere Ausführungsform der Erfindung ist durch Anspruch 5 angegeben. Bei dieser Ausführungsform ist der Service-Control-Point nicht gezwungen, einen Anruf auszulösen, wenn er ihn nicht sofort an einen Server zuteilen kann.

Eine weitere Ausführungsform der Erfindung ist durch Anspruch 6 angegeben. Diese Ausführungsform ist für solche Server optimal geeignet, die Anrufe parallel bedienen können und deshalb keine lokale Warteschlange führen müssen. Bei diesen Servern wird der Anzeigewert der Kapazitätsreserve nach Ablauf des genannten Zeitraums sofort auf die indirekt bestimmte Kapazitätsreserve erhöht.

Eine weitere Ausführungsform der Erfindung ist durch Anspruch 7 angegeben. Diese Ausführungsform ist für solche Server optimal geeignet, die Anrufe nur sequentiell bedienen können und deshalb selbst eine eigene lokale Warteschlange führen müssen. Die Kapazitätsreserve bzw. verfügbare Serverkapazität wird in diesem Fall nur Schritt für Schritt erhöht.

Im folgenden wird ein Ausführungsbeispiel der Erfindung anhand der Zeichnung näher erläutert.

Bei der Realisierung von netzweiter automatischer Anrufverteilung, Anrufwarteschlangen etc., tritt folgendes Problem auf. Ankommende Anrufe sollen durch die genannte Anrufverteilung auf mehrere Server verteilt werden, wobei ein Anruf einem Server nur dann zugestellt werden soll, wenn dieser den Anruf auch bedienen kann, der Server also bspw. nicht voll belegt ist.

Bei manchen Kommunikationssystemen kann aus technischen Gründen die Kapazitätsreserve eines Servers (z.B. die Zahl der Anrufe, die er noch zusätzlich parallel bedienen könnte) nicht direkt registriert werden. Deshalb muß die Kapazitätsreserve bei solchen Kommunikationssystemen indirekt bestimmt werden, indem die Zahl der vom Service Control Point gesteuerten Anrufe, die momentan für diesen Server aktiv sind, gezählt wird und daraus auf die verbleibende Kapazitätsreserve geschlossen wird.

Die indirekt bestimmte Kapazitätsreserve kann von der tatsächlichen Kapazitätsreserve abweichen, weil der Server zum Bestimmungszeitpunkt Anrufe erhalten kann, die nicht über das intelligente Netz vermittelt worden sind und damit vom Service Control Point nicht registriert werden. Des weiteren kann der Server auch Anrufe veranlassen, was ebenfalls vom Service Control Point nicht registriert werden kann. In diesen Fällen kann es geschehen, daß ein Service Control Point einen Anruf zu einem Server lenkt, der keine freie Kapazität hat (z.B. wegen eines von diesem Server empfangenen Anrufs, der nicht über das intelligente Netz vermittelt wurde).

Wenn der Server nun den zugeteilten Anruf wegen mangelnder Kapazitätreserve auslöst, wird dies durch Auswertung des Auslösegrundes in der Auslösenachricht vom SCP registriert und der Anruf wird erneut verteilt, so daß das Auslösen des Anrufs durch den Server für den Teilnehmer nicht sichtbar wird. Zusätzlich wird vom SCP der Anzeigewert der Kapazitätsreserve für einen bestimmten Zeitraum (Relaxationszeitraum) verringert bzw. mit einem Korrekturfaktor beaufschlagt, um ein erneutes Verteilen eines Anrufs an diesen Server innerhalb des genannten Zeitraums auszuschließen bzw. die Wahrscheinlichkeit dafür zu verringern.

Nach der genannten Relaxationszeit geht der SCP davon aus, daß der Server seinen ursprünglichen Zustand bzw. seine ursprüngliche Kapazitätsreserve wieder erreicht hat und erhöht den Anzeigewert der Kapazitätsreserve entsprechend.

Das genannte Verfahren zur Korrektur des Anzeigewertes der Kapazitätsreserve gewährleistet außerdem, daß im Falle eines Ausfalls (z.B. nach einem Recovery des SSP oder SCP) die Inhalte der Kapazitätsreservenzähler dennoch in etwa nach der Relaxationszeit wieder korrekte Werte der Kapazitätsreserve aufweisen.

Damit der SCP einen registrierten Anruf, den er mangels aufnahmefähiger Server nicht sofort verteilen kann, nicht auslösen muß, hält sich der SCP eine Warteschlange, in der er die registrierten Anrufe bis zu ihrer erfolgreichen Verteilung zwischenspeichert. Unter "erfolgreicher Verteilung" ist dabei zu verstehen, daß ein Server den zugeteilten Anruf tatsächlich auch bedient und ihn nicht etwa wegen mangelnder Kapazität auslöst.

Aus der Sichtweise(View) des Service Control Points stellt eine solche Warteschlange ein spezielles Ziel innerhalb des Verkehrsführungsprogramms(Routing-Tree) eines Dienstteilnehmers dar, das ein spezielles Programm des Service Control Points aktiviert, das im folgenden als Warteschlangen-Programm bezeichnet wird.

Jeder Warteschlange ist mindestens ein Server zugeordnet. Desweiteren kann ein Server mehr als eine einzige Warteschlange bedienen.

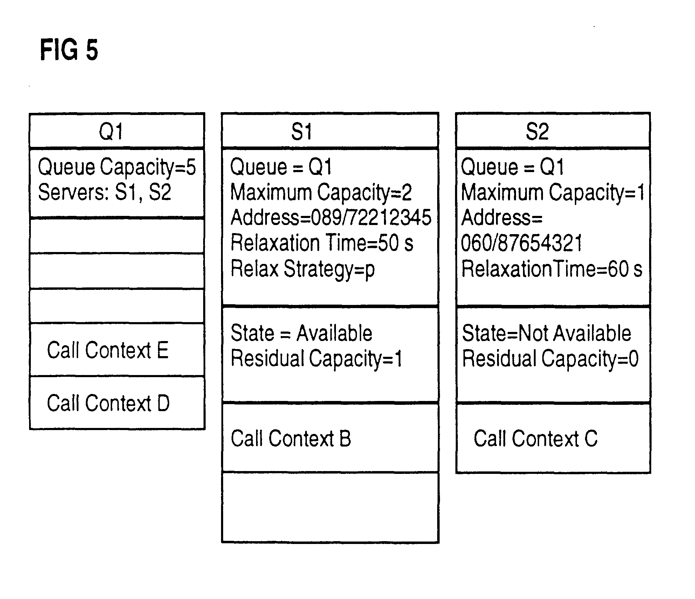

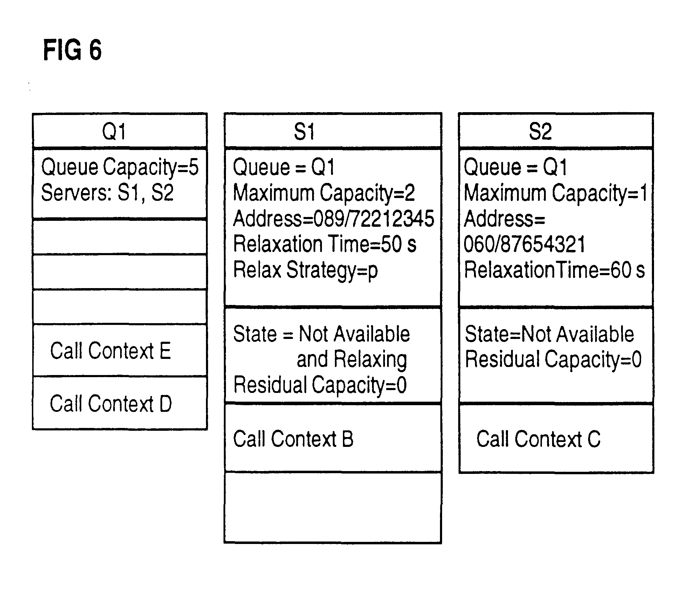

Jeder Server i wird aus der Sichtweise des Warteschlangen-Programms durch wenigstens folgende semipermanente Daten repräsentiert:
- eine Routing-Nummer, die die Bestimmungsadresse des Servers angibt,
- eine maximale Serverkapazität C (i, t), die die maximale Anzahl von gleichzeitigen IN-Anrufen, d.h. vom Service Control Point gesteuerten Anrufen angibt, die vom Server i behandelt werden können. Diese Serverkapazität kann von der Zeit t abhängig sein.
- eine Relaxationszeit Tᵣₗₓ (i), die die Zeit angibt, die der Service Control Point mindestens wartet, bevor er den nächsten Versuch macht, einen Anruf zu einem solchen Server zu leiten, der vorher einen Anruf zurückweisen mußte.
- Eine Relaxationsstrategie, die für diesen Server vom Warteschlagen-Programm zu benutzen ist. Weiter unten werden zwei Beispiele für solche Relaxationsstrategien anhand der Fig. 5 und 6 näher beschrieben.

Eine Warteschlange wird aus der Sichtweise des Warteschlangen-Programms durch wenigstens folgende semipermanente Daten repräsentiert:
- eine maximale Warteschlangen-Kapazität QC (t), die die maximale Zahl von Anrufen angibt, die in einer Warteschlange gesammelt werden können bzw. in dieser auf ihre Verteilung warten können. Wenn diese Kapazität erschöpft ist, werden ankommende Anrufe zu einer Ansage weitergeleitet und anschließend ausgelöst. Die Warteschlangen-Kapazität kann zeitabhängig sein. Anrufe, die bereits in die Warteschlange eingereiht sind, werden jedoch selbst bei einer Reduzierung der Warteschlangen-Kapazität nicht mehr ausgelöst.

Das Warteschlangen-Programm implementiert darüberhinaus eine Strategie zur Anrufverteilung, die festlegt, wie ankommende Anrufe auf die zugeordneten Server verteilt werden und welche Warteschlange zuerst bedient wird, wenn ein Server frei wird und diesem Server mehr als eine Warteschlange zugeordnet ist.

Die Sichtweise des Warteschlangen-Programms über den Zustand eines Servers i wird durch folgende transiente Daten wiedergegeben:
- einen Kapazitätsreservenzähler RC (i), der die verbleibende freie Kapazität eines Servers i wiedergibt,
- eine Liste mit N (i) Records, in denen die Kontexte derjenigen Anrufe, die vom Server i momentan behandelt werden, d.h. die am Server i momentan aktiv sind, abgespeichert sind. Die genannten Records, die im folgenden gemäß ihrem Inhalt als "Anruf-Kontexte(Call Contexts)" bezeichnet werden, werden über eine TCAP-Transaktionskennung adressiert und zwischen dem Service Switching Point und dem Service Control Point in Zeitintervallen T_{AT} von einer speziellen Überwachungsprozedur (Activity Test Procedure) überwacht.

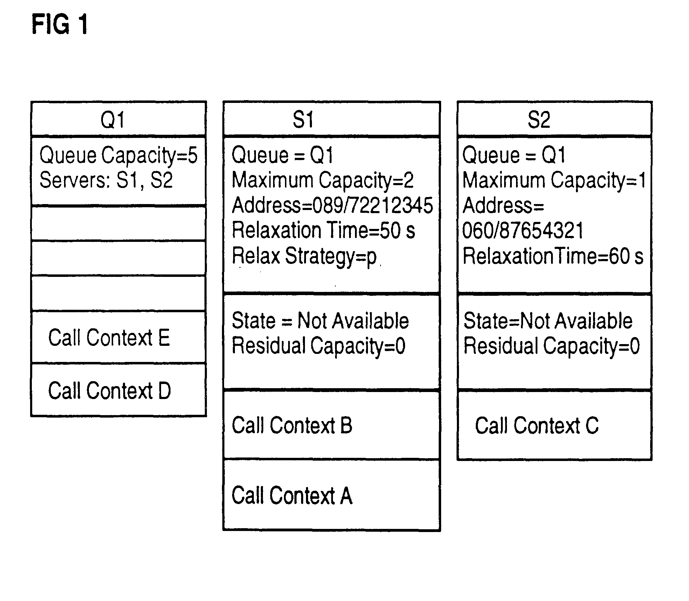

Fig. 1 zeigt ein Beispiel für die im Service Control Point vom Warteschlangen-Programm gehaltenen Daten, die die Zustände einer Warteschlange Q1 und der Server S1 und S2 reflektieren. Die Warteschlange Q1 hat eine Kapazität von fünf, d.h. sie kann maximal fünf Anrufe aufnehmen. Der Server S1 ist in der Lage zwei Anrufe parallel, d.h. gleichzeitig anzunehmen, während der Server S2 nur eine maximale Kapazität von eins hat, d.h. nur in der Lage ist jeweils einen einzigen Anruf anzunehmen. Bei der in Fig. 1 dargestellten Momentaufnahme (Schnappschuß) haben die beiden Server keine residuale Kapazität (keine Kapazitätsreserve), weil sie beide mit IN-Anrufen A, B und C belegt sind.

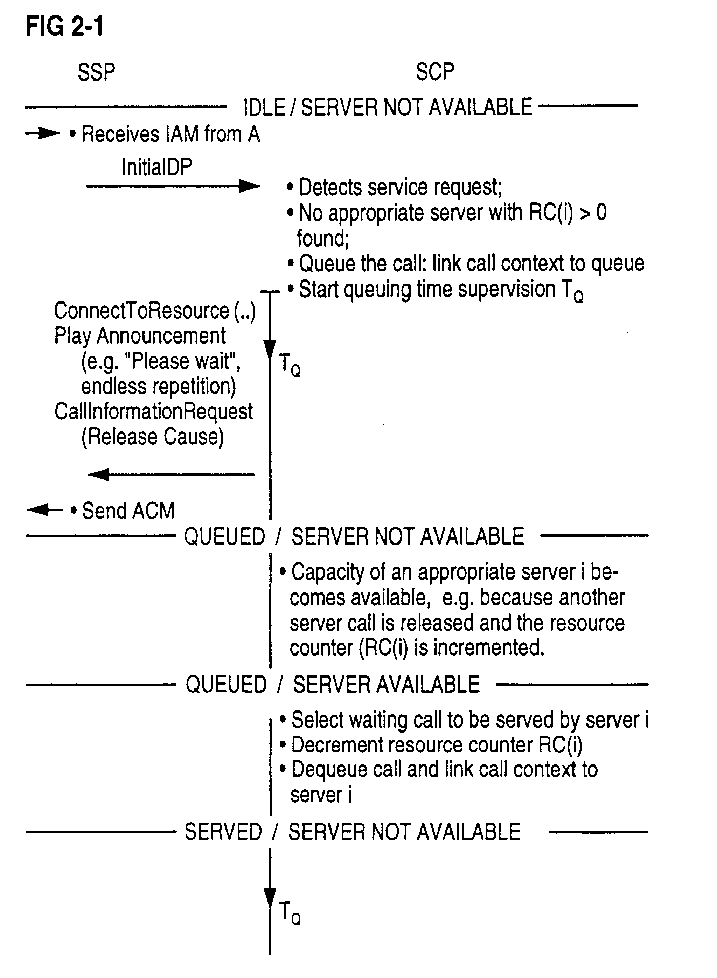

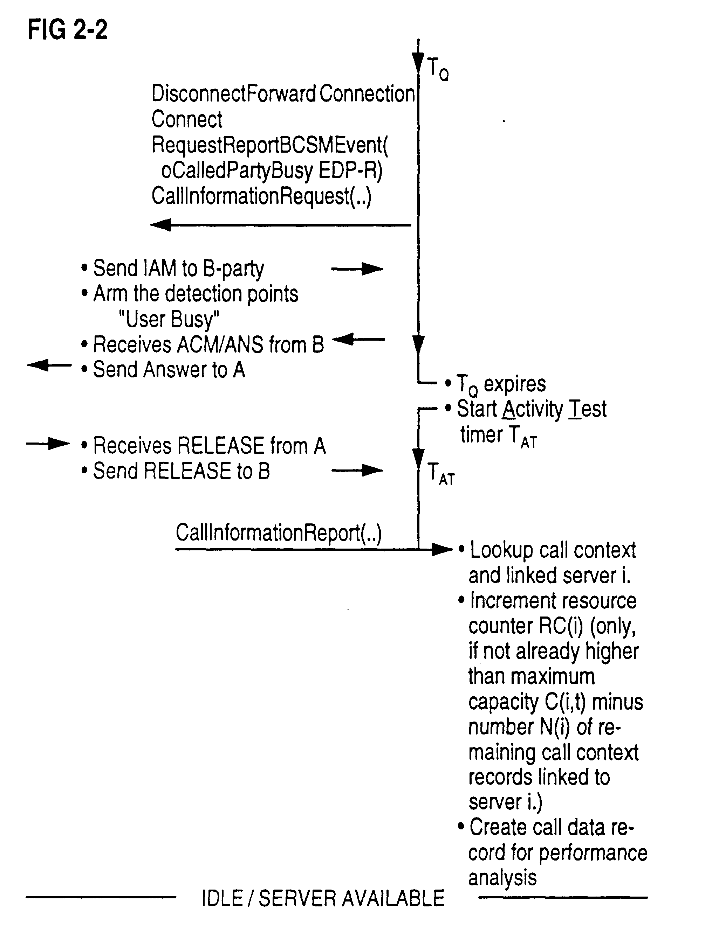

Fig. 2 zeigt den Nachrichtenfluß zwischen SSP und SCP bei einem erfolgreich bedienten Anruf, wobei unter einem erfolgreich bedienten Anruf ein Anruf zu verstehen ist, der vom SCP an einen Server verteilt wird und dieser Server den an ihn verteilten Anruf nicht wegen mangelnder Kapazität auslöst.

Zunächst erhält die Zugangsvermittlungsstelle SSP, die den Zugang eines Teilnehmers zum intelligenten Netz darstellt, von der Ursprungsvermittlungsstelle eines Teilnehmers A die Initialisierungsmeldung IAM, die den Anruf gegenüber dem IN triggert. Daraufhin sendet die Zugangsvermittlungsstelle dem SCP die Initialisierungsmeldung "Initial DP", aufgrund derer der SCP eine Service-Anforderung registriert und daraufhin das Warteschlangen-Programm startet. Das Warteschlangen-Programm sucht nun einen geeigneten Server i, dessen Kapazitätsreservenzahler RC (i) größer 0 ist, d.h. der noch verfügbar ist. Das Warteschlangen-Programm findet zu diesem Zeitpunkt keinen verfügbaren Server was in Fig. 2 durch die Zustandsbeschreibung "Server not available" zum Ausdruck gebracht wird. In Fig. 2 wird durch den Ausdruck "IDLE" des weiteren zum Ausdruck gebracht, daß der Anruf bzw. die Service-Anforderung vom Warteschlangen-Programm noch nicht behandelt worden ist.

Da im vorliegenden Fall vom Warteschlangen-Programm kein verfügbarer Server gefunden wurde, reiht das Warteschlangen-Programm den Anruf in die Warteschlange ein, indem es den AnrufContext an die Datenstruktur "Warteschlange" anhängt. Gleichzeitig startet es einen Warteschlangen-Timer T_{Q}, der einen maximale Verweilzeit des Anrufs in der Warteschlange definiert. Der Wert für den Timer T_{Q} ist von dem durch den Anruf angeforderten Service abhängig.

Um die Wartezeit des Teilnehmers A auf den angeforderten Service zu überbrücken, wird diesem, angefordert durch die Anweisungen "Connect_to_Resource" und "Play_Announcement", beispielsweise eine Wartemeldung zugespielt.

Nach einer gewissen Wartezeit wird einer der vorhandenen Server, beispielsweise ein Server i wieder verfügbar, d.h. sein Kapazitätsreservenzähler RC (i) wird wieder größer 0, weil bspw. ein von diesem Server i bedienter IN-Anruf beendet worden ist. Diese Zustandsänderung wird in Fig. 1 durch den Ausdruck "Server available" markiert. Das Warteschlangen-Programm wählt daraufhin einen in der Warteschlange wartenden Anruf aus, der nun dem Server i zugeteilt wird, d.h. der nun vom Server i bedient werden soll. Nach der erfolgten Zuteilung erniedrigt das Warteschlangen-Programm den Kapazitätsreservenzähler RC (i) entsprechend. Außerdem reiht es den Anruf aus der Warteschlange aus und hängt den Anrufcontext an die von ihm gehaltene Datenstruktur "Server i" an. Die Zustandbeschreibung des Anrufs wird nun von "Queued" auf "Served" geändert und die Zustandsbeschreibung der Server wird nun von "Server available" auf "Server not available" geändert.

Der Warteschlagen-Timer läuft im übrigen auch dann weiter, wenn der dem Server i zugeteilte Anruf von diesem abgewiesen wird und der Anruf in diesem Fall vom Warteschlangen-Programm wieder in die Warteschlange eingereiht werden muß. In diesem Fall darf nämlich nicht erneut die gesamte maximale Wartezeit überwacht werden. Außerdem sollte der wieder eingereihte Anruf bei der erneuten Verteilung vorrangig behandelt werden.

Die Zuteilung eines Anrufs zu einem Server i erfolgt über die Operationen "Connect" und "Request_Report_BCSM_Event", durch die der SCP die Zugangsvermittlungsstelle SSP anweist, den Anruf dem Server i zuzuleiten und den Detektierungspunkt "User Busy" als einen Ereignis-Detektierungspunkt vom Typ "Request" (d.h. das Call Processing wird suspendiert, wenn der Detektierungspunkt getroffen wird) zu armieren. Abhängig von Serviceanforderungen kann zusätzlich der Detektierungspunkt "No answer" armiert werden.

Darüberhinaus fordert der SCP über die Operation "Call_Information_Request" von der Zugangsvermittlungsstelle eine Mitteilung über den Auslösegrund und einen Zeitstempel über den Anruf, der den Auslösegrund darstellt. Dies stellt sicher, daß der SCP informiert wird, wenn ein Anruf ausgelöst wird, und daß er über die Zeitstempel entsprechende Daten erhält, um über die Server-Performance eine entsprechende Statistik zu führen.

Die Zugangsvermittlungsstelle baut mit Hilfe der Routing-Nummer des Servers i über die Meldung IAM die Verbindung zum Server i auf und armiert die obengenannten Detektierungspunkte. Der Server i bedient nach dem Verbindungsaufbau den Anruf und nach einer bestimmten Zeit wird dieser entweder vom Server i oder vom Teilnehmer A, wie z.B. in Fig. 2, wieder ausgelöst.

Der Warteschlangentimer T_{Q} ist derart ausgelegt, daß er normalerweise während der Bedienung des Anrufs durch den Server i abläuft. Nach Ablauf dieses Timers wird ein Aktivitätstest-Timer T_{AT} gesetzt. Falls dieser abläuft, d.h. falls sein Ablauf nicht durch das Eintreffen der Endemeldung "Call_Information_Report" verhindert wird, stößt der SCP eine Aktivitätstest-Prozedur an, die überprüft, ob der Server tatsächlich noch mit der Bedienung des Anrufs beschäftigt ist.

Wenn der Teilnehmer A den Anruf ausgelöst hat, informiert die Zugangsvermittlungsstelle den SCP über die Meldung "Call_Information_Report" über das Auslösen des Anrufs. Der SCP schaut daraufhin in den Anruf-Kontext und die Datenstruktur "Server i", mit der dieser Anruf-Kontext verknüpft ist. Schließlich erhöht der SCP den Kapazitätsreservenzähler RC (i) entsprechend, speichert die für die Performanceanalyse relevanten Anrufdaten ab und löst den Anruf-Kontext für den genannten Anruf auf.

Da die maximale Serverkapazität C (i, t) zeitabhängig sein kann, muß immer sichergestellt sein, daß der Kapazitätsreservenzähler die maximal verfügbare Serverkapazität C (i, T) - N (i) nicht überschreitet, wobei N (i) die Zahl der Anruf-Kontexte angibt, die mit dem Server i verknüpft sind.

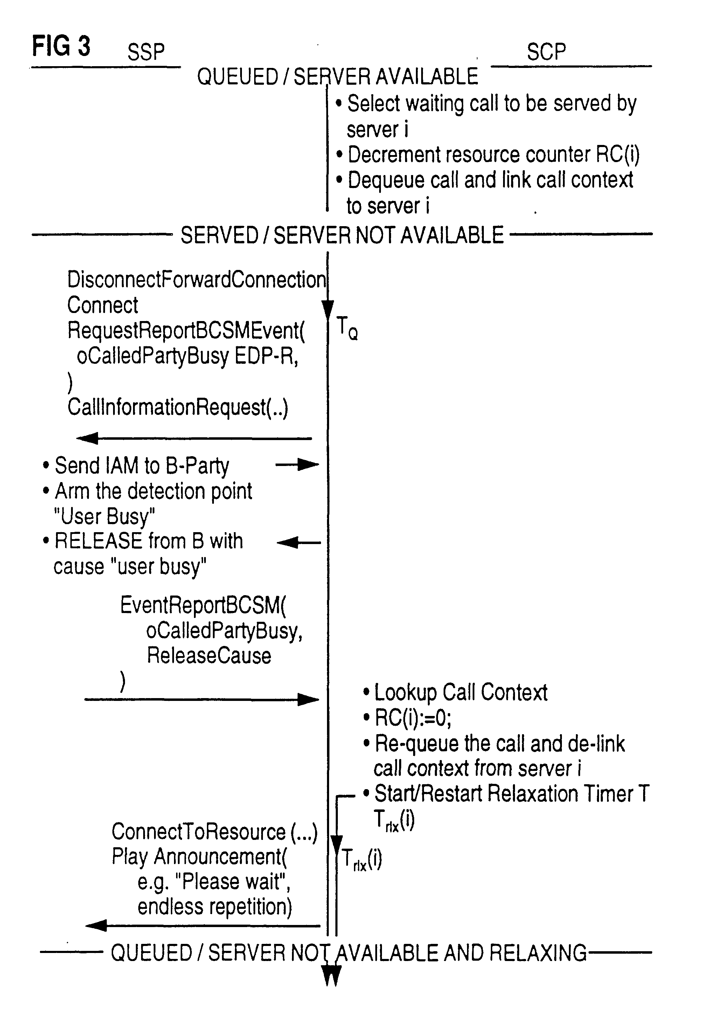

Fig. 3 zeigt, wie der SCP sein Modell des Serverzustands anpaßt, wenn er eine Diskrepanz zwischen dem erwarteten Serverzustand ("Available") und dem tatsächlichen Serverzustand ("Not available") feststellt.

Zunächst ist der Nachrichtenfluß derselbe, wie bei einem erfolgreich bedienten Anruf (siehe Fig. 2). Nachdem die Zugangsvermittlungsstelle die Verbindung zu einem Server i aufgebaut hat, wird jedoch im Unterschied zu dem Fall nach Fig. 2 eine rückwärtige Auslösung, d.h. eine Auslösung durch den Server i, mit dem Auslösegrund "User Busy" von der Zugangsvermittlungsstelle SSP registriert. Dieser Fall kann bspw. dann eintreten, wenn der Server i auch nicht über das intelligente Netz vermittelte Anrufe bedienen kann oder selbst Anrufe veranlassen kann.

Die Zugangsvermittlungsstelle teilt dieses Auslösen des Servers i über die Meldung "Event_Report_BCSM" dem SCP mit. Daraufhin schaut der SCP zunächst in den Call Context und dann in den Server i, mit dem dieser Call Context verknüpft ist und setzt den Anzeigewert der Kapazitätsreserve des Servers i bzw. den Kapazitätsreservenzähler RC (i) zu Null.

Daraufhin startet der SCP den Relaxations-Timer Tᵣₗₓ (i) des Servers i, bei dem es sich also um einen serverbezogenen Timer und nicht um einen anrufbezogenen Timer handelt.

Schließlich wird der Anruf wieder in die Warteschlange eingereiht und die Verknüpfung des Call Context mit dem Server i gelöst. Dies geschieht nur dann, falls der Warteschlangentimer T_{Q} noch nicht abgelaufen ist. Die Zugangsvermittlungsstelle wird über die Kommandos "Connect_to_Resource" und "Play_Announcement" vom SCP angewiesen den Teilnehmer A mit einer Ansage zu verbinden, die ihn beispielsweise zum Warten auffordert.

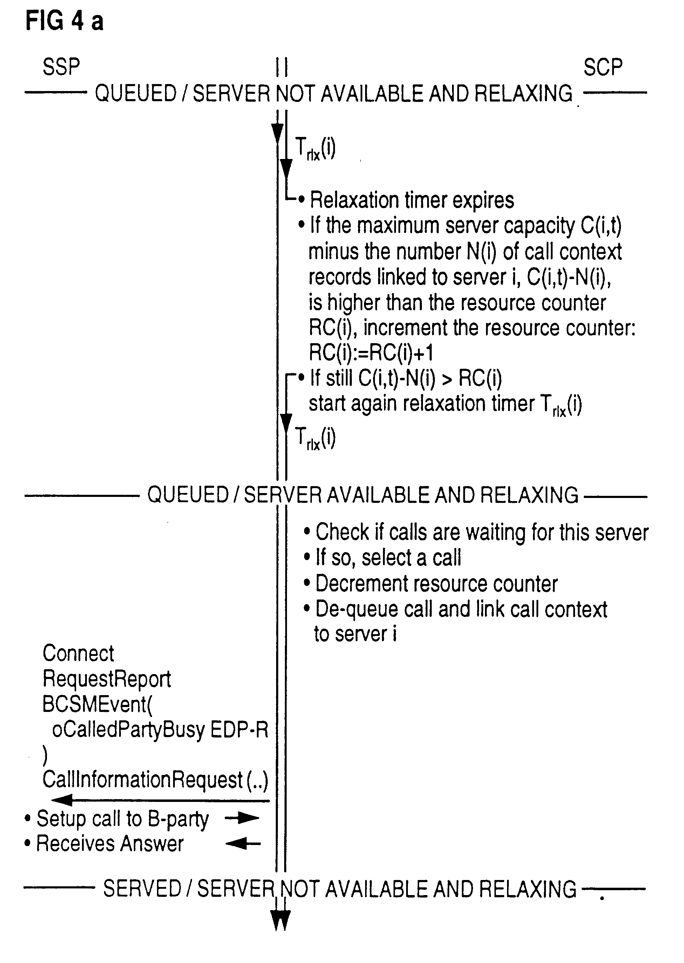

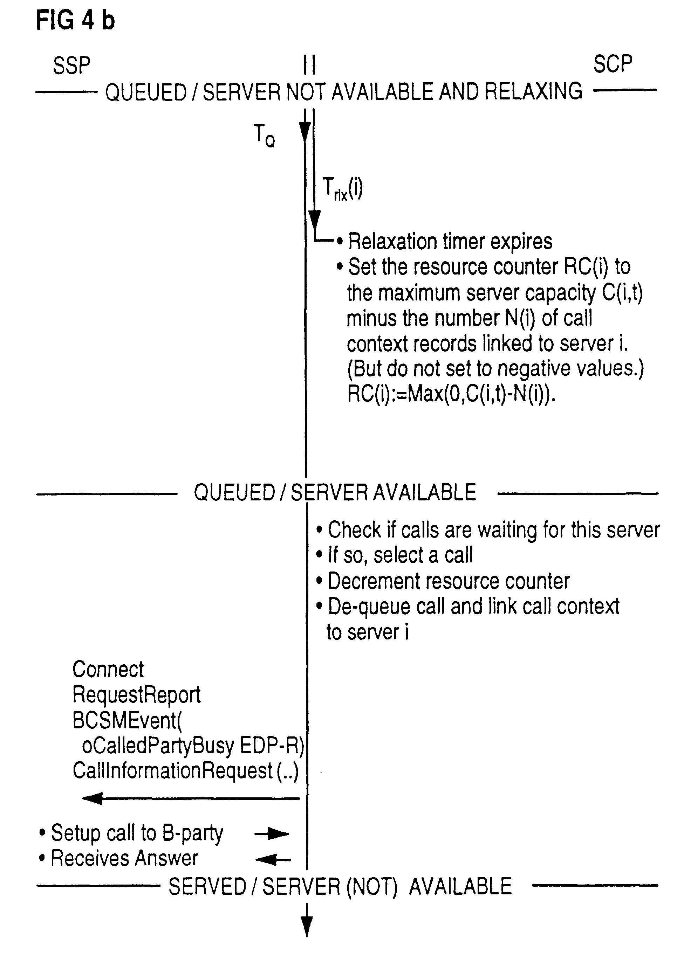

Falls der Warteschlangen-Timer abgelaufen ist, wird der Anruf nicht wieder eingereiht, sondern ausgelöst (vgl. Fig. 4).

Wenn der Relaxations-Timer abläuft, wird der Kapazitätreservenzähler desjenigen Servers, der den Relaxations-Timer ausgelöst hat, erhöht. Der Betrag, um den der Kapazitätszähler erhöht wird, hängt von der Relaxationsstrategie ab, die einem jeweiligen Server zugeordnet ist. Durch die Figuren 4a und 4b werden zwei verschiedene Relaxationsstrategien veranschaulicht.

Fig. 4a zeigt die pessimistische Relaxationsstrategie, bei der der Kapazitätsreservenzähler nach jedem Ablauf des Relaxations-Timers jeweils nur um eins erhöht wird. Falls er nach einer jeweiligen Erhöhung um eins immer noch niedriger, als die indirekt bestimmte Kapazitätreserve C (i, t) - N (i) ist, wird der Relaxations-Timer erneut gestartet. Mit der pessimistischen Relaxationsstrategie wird der Kapazitätsreservenzähler also schrittweise an die indirekt bestimmte Kapazitätreserve des Servers angepaßt.

Fig. 4b zeigt eine optimistische Relaxationsstrategie, bei der der Kapazitätsreservenzähler nach Ablauf des Relaxations-Timers sofort auf die indirekt bestimmte Kapazitätreserve C (i, t) - N (i) gesetzt wird.

Die pessimistische Relaxationsstrategie ist am besten für solche Fälle geeignet, bei denen der Server selbst eine zusätzliche lokale Warteschlange führt und Anrufe nach dieser Warteschlange sequentiell bedienen muß. Die Serverkapazität wird in diesem Fall nur Schritt für Schritt verfügbar werden.

Die optimistische Relaxationsstrategie ist beispielsweise für solche Fälle geeignet, bei denen der Server (z.B. Attendant Group) Anrufe parallel bedienen kann und er deshalb keine lokale Warteschlange führen muß. Die Zeit, in der die Kapazität eines solchen Servers durch Nicht-IN-Anrufe blockiert ist, wird somit meistens nicht von der Zahl solcher Nicht-IN-Anrufe abhängen.

Wenn Serverkapazität verfügbar wird, wird überprüft, ob Anrufe auf eine Bedienung durch diesen Server warten. Falls dem so ist, wird gemäß einer Warteschlangenstrategie der nächste zu bedienende Anruf aus einer Warteschlange ausgewählt. Der ausgewählte Anruf wird von der Ansage getrennt und mit dem Server verbunden. Um für denjenigen Fall Vorsorge zu treffen, daß der Server immer noch belegt ist, werden die entsprechenden, bereits genannten Detektionspunkte ausgerüstet.

Fig. 5 zeigt ein weiteres Beispiel der vom Warteschlangen-Programm zu einem bestimmten Zeitpunkt gehaltenen Daten. Als Vorgeschichte ist dabei angenommen, daß der Server S1 einen Anruf A auslöst hat und sofort danach einen Anruf angenommen hat, der nicht vom intelligenten Netz behandelt wird, so daß das intelligente Netz, bzw. genauer gesagt das Warteschlangen-Programm nicht registrieren kann, daß der Server S1 erneut belegt ist. Die datenmäßige Reflexion dieser Situation ist in Fig. 5 wiedergegeben.

Aufgrund der vorhandenen Daten wird das Warteschlangen-Programm des Service Control Points den Anruf D dem Server S1 zuzuteilen.

Da die tatsächliche Kapazitätsreserve des Servers 1 = 0 ist, wird der Server 1 den zugeteilten Anruf auslösen und der SCP wird darüber mit Hilfe des Detektierungspunktes "User Busy" informiert werden. Daraufhin wird der SCP den Anruf D wieder in die Warteschlange einreihen, den Kapazitätsreservenzähler zum Zählen der residualen Kapazität auf null setzen und einen Relaxations-Timer für den Server 1 starten. Diese Situation ist in Fig. 6 datenmäßig wiedergegeben.

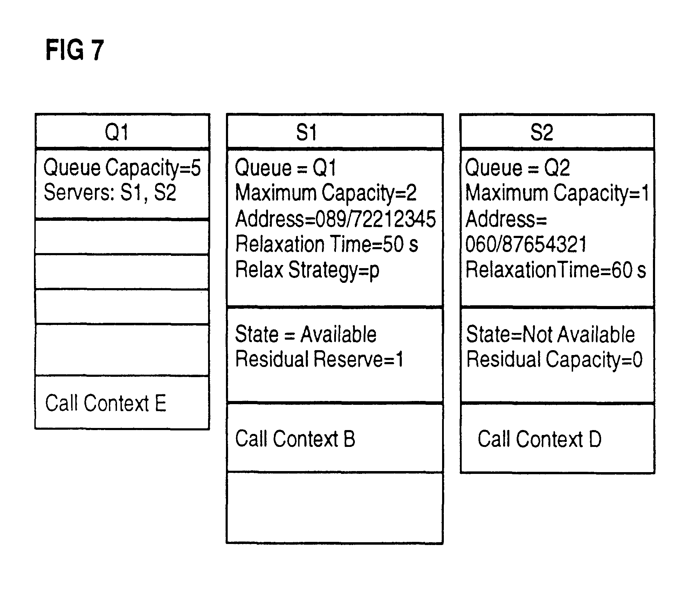

Nach einer Relaxationszeit von, in diesem Fall 50 sek läuft der Relaxations-Timer ab und der SCP erhöht den Kapazitätsreservenzähler wieder auf den Anzeigewert eins. Diese Situation ist in Fig. 7 angegeben.

Aus Fig. 7 ist des weiteren ersichtlich, daß der Anruf C während der Relaxationsphase des Servers 1 ausgelöst wurde und der Anruf D nunmehr an den Server 2 zugeteilt worden ist und von diesem bedient wird. Aus der Sichtweise des SCP ist der Server 1 nunmehr in der Lage wieder einen Anruf zu bedienen und ihm deshalb den in der Warteschlange auf Bedienung wartenden Anruf E zuteilen.

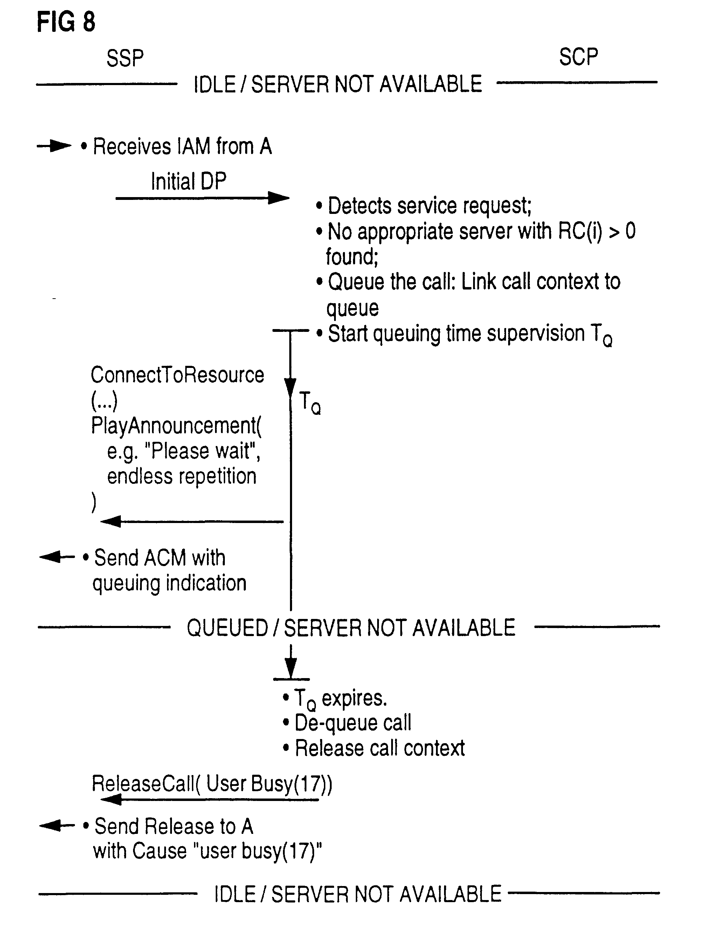

Fig. 8 zeigt die Behandlung eines Falles, bei dem der Warteschlagen-Timer abläuft und der Anruf immer noch in der Warteschlage eingereiht ist. In diesem Fall wird der Call Context aus der Warteschlage ausgereiht und freigegeben. Der Zugangsvermittlungsstelle wird sodann über die Operation "Release_Call" die Anweisung erteilt, den Anruf auszulösen, und zwar wegen des Auslösegrundes "User Busy". Des weiteren wird ein Anrufdatenrecord für die Zwecke der Performance Analysis erzeugt. Anschließend wird der Call Context freigegeben.

Schließlich löst die Zugangsvermittlungsstelle den Anruf mit dem ISUP-Kommando "Release" aus, das an die entsprechenden Einrichtungen des Teilnehmers A gesandt wird.

## Patentansprüche

1. Verfahren zum Verteilen von Anrufen in einem Kommunikationsnetz, demgemäß
a) Anrufe von einer zentralen Instanz (SCP) des Kommunikationsnetzes registriert und daraufhin Servern zugeteilt werden, die die Anrufe dann bedienen,
b) von den Servern auch Anrufe bedient werden können, die nicht von der zentralen Instanz (SCP) registriert und zugeteilt worden sind,
c) nach einer erfolgten Zuteilung durch die zentrale Instanz (SCP) überwacht wird, ob ein Server einen zugeteilten Anruf mangels ausreichender Kapazität auslöst,
d) im Falle der Auslösung des Anrufs mangels ausreichender Kapazität, dieser Server für einen bestimmten Zeitraum (Tᵣₗₓ) von einer weiteren Zuteilung eines Anrufs durch die zentrale Instanz (SCP) ausgeschlossen wird oder die Wahrscheinlichkeit für eine weitere Zuteilung für den genannten Zeitraum (Tᵣₗₓ) verringert wird.

2. Verfahren nach Anspruch 1,
**dadurch gekennzeichnet, daß**
im Falle der Auslösung des Anrufs mangels ausreichender Kapazität dieser Anruf einem anderen Server zugeteilt wird, ohne daß die erfolgte Auslösung für die anrufende Partei erkennbar wird.

3. Verfahren nach Anspruch 1 oder 2,
**dadurch gekennzeichnet,daß**
die Zuteilung durch die zentrale Instanz (SCP) mit Hilfe von Anzeigewerten über die Kapazitätsreserven der Server durchgeführt wird, wobei der Anzeigewert (RC) der Kapazitätsreserve eines Servers gebildet bzw. aktualisiert wird, indem der bisherige Anzeigewert bei jeder erfolgten Zuteilung eines Anrufs zu diesem Server um die Kapazitätsbeanspruchung des Anrufs verringert wird und bei jedem erfolgten Auslösen entsprechend erhöht wird, und wobei die Zuteilung an einen Server dann erfolgen darf, wenn der zu diesem Server gehörige Anzeigewert eine ausreichende Kapazitätsreserve anzeigt.

4. Verfahren nach Anspruch 3,
im Falle der Auslösung des Anrufs durch den Server mangels ausreichender Kapazität die Wahrscheinlichkeit für eine weitere Zuteilung eines Anrufs an diesen Server dadurch verringert wird, daß der Anzeigewert der Kapazitätsreserve des Servers für einen bestimmten Zeitraum (Tᵣₗₓ) um einen Korrekturwert verringert wird, wobei der Korrekturwert dem Anzeigewert zum Zeitpunkt der erfolglosen Zuteilung oder des Auslösens entspricht.

5. Verfahren nach einem der Ansprüche 1 bis 4,
**dadurch gekennzeichnet,daß**
Anrufe, die mangels ausreichender Kapazität der Server nicht sofort verteilt werden können, zunächst in einer Warteschlange zwischengespeichert werden, wobei der anrufenden Partei gegebenenfalls eine Warteaufforderung vermittelt wird.

6. Verfahren nach einem der Ansprüche 4 bis 5,
**dadurch gekennzeichnet,**
**daß** die Beaufschlagung des Anzeigewertes der Kapazitätsreserve mit einem Korrekturfaktor nach Ablauf der genannten Zeitspanne (Tᵣₗₓ) vollständig zurückgenommen wird.

7. Verfahren nach einem der Ansprüche 4 oder 5,
**dadurch gekennzeichnet,**
**daß** die Beaufschlagung des Anzeigewert der Kapazitätsreserve mit einem Korrekturwert schrittweise zurückgenommen wird, wobei eine Schrittlänge der genannten Zeitspanne (Tᵣₗₓ) entspricht.

## Claims

1. Method for distributing calls in a communication network, according to which
a) calls are registered by a central entity (SCP) of the communication network and are then allocated to servers which then handle the calls,
b) the servers can also handle calls which have not been registered and allocated by the central entity (SCP),
c) after an allocation has taken place, the central entity (SCP) monitors whether a server releases an allocated call for lack of sufficient capacity,
d) in the case where the call is released for lack of sufficient capacity, this server is excluded from further allocation of a call by the central entity (SCP) for a certain period of time (Tᵣₗₓ) or the probability of a further allocation is reduced for the said period of time (Tᵣₗₓ).

2. Method according to Claim 1, **characterized in that**, in the case where the call is released for lack of sufficient capacity, this call is allocated to another server without the completed release being detectable by the calling party.

3. Method according to Claim 1 or 2, **characterized in that** the allocation by the central entity (SCP) is performed with the aid of indicating values about the capacity reserves of the servers, the indicating value (RC) of the capacity reserve of a server being formed or updated **in that** the previous indicating value is decreased by the capacity used by the call with each completed allocation of a call to this server and is correspondingly increased with each completed release, and the allocation to a server being permitted when the indicating value belonging to this server indicates a sufficient capacity reserve.

4. Method according to Claim 3, **characterized in that**, in the case where the call is released by the server for lack of sufficient capacity, the probability of any further allocation of a call to this server is reduced by the fact that the indicating value of the capacity reserve of the server is reduced by a correction value for a certain period of time (Tᵣₗₓ), the correction value corresponding to the indicating value at the time of the unsuccessful allocation or of the release.

5. Method according to one of Claims 1 to 4, **characterized in that** calls which cannot be immediately distributed for lack of sufficient capacity of the servers are first temporarily stored in a queue, a wait request being conveyed to the calling party, if necessary.

6. Method according to one of Claims 4 to 5, **characterized in that** the application of a correction factor to the indicating value of the capacity reserve is completely cancelled after the said period of time (Tᵣₗₓ) has elapsed.

7. Method according to one of Claims 4 or 5, **characterized in that** the application of a correction value to the indicating value of the capacity reserve is cancelled step by step, one step length corresponding to the said period of time (Tᵣₗₓ).

## Revendications

1. Procédé pour la distribution d'appels dans un réseau de communication, selon lequel
a) des appels sont enregistrés par une instance centrale (SCP) du réseau de communication, puis attribués à des serveurs qui gèrent ensuite les appels,
b) lesdits serveurs peuvent gérer aussi des appels qui n'ont pas été enregistrés et attribués par l'instance centrale (SCP),
c) après une attribution, l'instance centrale (SCP) surveille si un serveur libère un appel attribué faute de capacité suffisante,
d) en cas de libération de l'appel faute de capacité suffisante, ce serveur est exclu d'une autre attribution d'appel par l'instance centrale (SCP) pour une période (Tᵣₗₓ) déterminée ou la probabilité d'une autre attribution pour la période (Tᵣₗₓ) citée est diminuée.

2. Procédé selon la revendication 1, **caractérisé en ce qu'**en cas de libération de l'appel faute de capacité suffisante, cet appel est attribué à un autre serveur sans que ladite libération devienne reconnaissable pour l'appelant.

3. Procédé selon la revendication 1 ou 2, **caractérisé en ce que** l'attribution est réalisée par l'instance centrale (SCP) à l'aide de valeurs d'indication sur les réserves de capacité des serveurs, la valeur d'indication (RC) de la réserve de capacité d'un serveur étant formée respectivement actualisée en diminuant la valeur d'indication actuelle, à chaque attribution d'un appel à ce serveur, de la capacité sollicitée par l'appel et en l'augmentant en conséquence à chaque libération, et l'attribution à un serveur ne pouvant avoir lieu que si la valeur d'indication associée à ce serveur indique une réserve de capacité suffisante.

4. Procédé selon la revendication 3, **caractérisé en ce qu'**en cas de libération de l'appel par le serveur faute de capacité suffisante, la probabilité d'une autre attribution d'appel à ce serveur est diminuée en diminuant la valeur d'indication de la réserve de capacité du serveur, pendant une période (Tᵣₗₓ) déterminée, d'une valeur de correction, ladite valeur de correction correspondant à la valeur d'indication à l'instant de l'attribution infructueuse ou de la libération.

5. Procédé selon l'une des revendications 1 à 4, **caractérisé en ce que** les appels ne pouvant être distribués instantanément faute de capacité suffisante des serveurs sont d'abord stockés provisoirement dans une file d'attente, une invitation à attendre étant éventuellement transmise à l'appelant.

6. Procédé selon l'une des revendications 4 à 5, **caractérisé en ce que** l'application d'une valeur de correction à la valeur d'indication de la réserve de capacité est entièrement retirée au terme de la période (Tᵣₗₓ) citée.

7. Procédé selon l'une des revendications 4 ou 5, **caractérisé en ce que** l'application d'une valeur de correction à la valeur d'indication de la réserve de capacité est retirée pas à pas, une longueur de pas correspondant à la période (Tᵣₗₓ) citée.
